# EUROPEAN PATENT APPLICATION

(11) **EP 3 065 473 A1**
(43) Date of publication of application: **07.09.2016**
(21) Application number: 14858705.8
(22) Date of filing: 16.10.2014
(51) Int. Cl.: H04W 52/02, H04W 72/04

(54) **RADIO BASE STATION, USER TERMINAL, AND RADIO COMMUNICATION METHOD**

(30) Priority: 31.10.2013 JP 2013227340
(71) Applicant: NTT DOCOMO, INC., Chiyoda-ku Tokyo 100-6150 (JP)
(72) Inventor: TAKEDA, Kazuaki, Tokyo 100-6150 (JP); UCHINO, Tooru, Tokyo 100-6150 (JP)
(74) Representative: Hoffmann Eitle
(86) International application number: PCT/JP2014/077490
(87) International publication number: WO 2015/064368

(57) **Abstract**

The present invention is designed to optimize the operation for starting data communication when traffic is produced on the base station side in dual connectivity A structure is provided in which, when a user terminal (20) is in DRX mode in a first carrier that is used in a secondary base station (12), a master base station (11) communicates with the user terminal by using a second carrier, and, when traffic is produced in in the subject station or in the secondary base station, transmits command information for allowing the user terminal to transition from DRX mode to non-DRX mode, to the user terminal.

## Description

### Technical Field

The present invention relates to a radio base station, a user terminal and a radio communication method in a next-generation mobile communication system.

### Background Art

Conventionally, various radio communication schemes are used in radio communication systems. For example, in UMTS (Universal Mobile Telecommunication System), which is also referred to as "W-CDMA (Wideband Code Division Multiple Access)," code division multiple access (CDMA) is used. Also, in LTE (Long Term Evolution), orthogonal frequency division multiple access (OFDMA) is used (see, for example, non-patent literature 1).

Also, successor systems of LTE (referred to as, for example, "LTE-advanced" or "LTE enhancement" (hereinafter referred to as "LTE-A")) are under study for the purpose of achieving further broadbandization and increased speed beyond LTE. In the LTE-A system, a HetNet (Heterogeneous Network) is under study, in which small cells, each having local a coverage area of a radius of approximately several tens of meters, are formed within a macro cell having a wide-range coverage area of a radius of approximately several kilometers.

### Citation List

### Non-Patent Literature

Non-patent Literature 1: 3GPP TR 25.913 "Requirements for Evolved UTRA and Evolved UTRAN"

### Summary of Invention

### Technical Problem

Now, in Rel-12, a scenario to allow a plurality of cells to use different frequency bands (carriers) is under study. If the base stations of a plurality of cells are substantially the same, it is possible to employ carrier aggregation (intra-eNB CA). On the other hand, when the base stations of a plurality of cells are completely different, dual connectivity (inter-eNB CA) may be used. In dual connectivity, DRX (Discontinuous Reception) is configured on a per base station basis, from the perspective of battery consumption. Given that the start of data communication depends on the DRX cycle when traffic is produced on the base station side, with dual connectivity, the optimization of the operation to start data communication remains as a problem.

The present invention has been made in view of the above, and it is therefore an object of the present invention to provide a radio base station, a user terminal and a radio communication method which can optimize the operation to start data communication when traffic is produced on the base station side in dual connectivity.

### Solution to Problem

The radio base station of the present invention provides a radio base station that, when a user terminal is in discontinuous reception mode in a first carrier used in another radio base station, communicates with the user terminal by using a second carrier that is different from the first carrier of the other radio base station, and this radio base station has a transmitting section that, when traffic is produced in the radio base station or in the other radio base station, transmits command information for allowing the user terminal to transition from discontinuous reception mode to non-discontinuous reception mode, to the user terminal.

### Advantageous Effects of Invention

According to the present invention, when traffic is produced in a radio base station or in another radio base stations in dual connectivity, command information is transmitted from the radio base station to a user terminal. The user terminal, by receiving this command information, transitions from discontinuous reception mode to non-discontinuous reception mode with respect to a first carrier. Consequently, the operation in the user terminal to start data communication in the first carrier do not rely on the receiving timing during discontinuous reception mode, so that it is possible to quickly start data communication between the user terminal and other radio base stations.

### Brief Description of Drawings

FIG. 1 is a conceptual diagram of a HetNet;
FIG. 2 a diagram to explain discontinuous reception;
FIG. 3 is a diagram to explain the operation of a user terminal to start communication in dual connectivity;
FIG. 4 is a diagram to show an example of a discontinuous reception operation in dual connectivity;
FIGs. 5 provide diagrams to show examples of the operation of a user terminal to start communication with a secondary base station;
FIG. 6 is a diagram to show a schematic structure of a radio communication system;
FIG. 7 is a diagram to show an overall structure of a radio base station;
FIG. 8 is a diagram to show a principle functional structure of a baseband signal processing section in a master base station;
FIG. 9 is a diagram to show a principle functional structure of a baseband signal processing section in a secondary base station;
FIG. 10 is a diagram to show an overall structure of a user terminal; and
FIG. 11 is a diagram to show a principle functional structure of a baseband signal processing section in a user terminal.

### Description of Embodiments

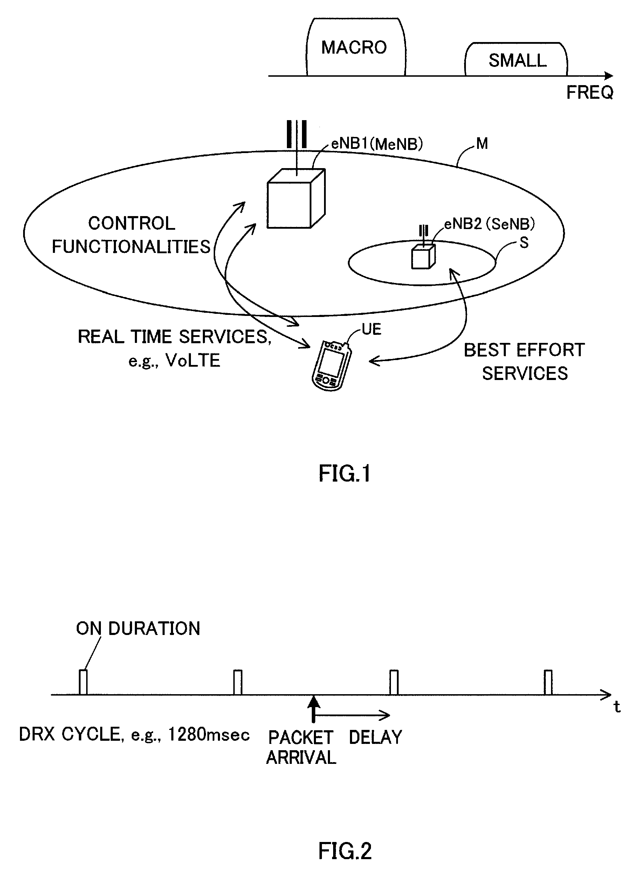

FIG. 1 is a conceptual diagram of a HetNet. As shown in FIG. 1, a HetNet refers to a radio communication system in which a macro cell M and a small cell S are placed to physically overlap each other at least in part. A HetNet is formed by including a radio base station eNB 1 that forms a macro cell M (hereinafter referred to as a "macro base station"), a radio base station eNB 2 that forms a small cell S (hereinafter referred to as a "small base station"), and a user terminal UE that communicates with the macro base station eNB 1 and the small base station eNB 2. Note that the small cell S is a concept to cover a phantom cell, a pico cell, a nano cell, a femto cell, a micro cell and so on.

In the HetNet structure, a scenario to provide small cells S in a high-density deployment is under study for the purpose of supporting the continuing growth of traffic. According to this scenario, a carrier of a relatively low frequency band is used in the macro cell M, and a carrier of a relatively high frequency band is used in the small cells S. In the macro cell layer, a wide coverage and mobility are secured by establishing a control-plane connection and supporting high transmission power density in a low frequency band. On the other hand, in the high-density small cell layer, throughput is increased by establishing a data-only, user-plane connection and securing capacity in a high frequency band.

As a method of realizing the above scenario, connecting between the macro cell M and the small cells S with a backhaul is ideal, and, if the macro cell M and the small cells S use substantially the same base stationthat is, share a scheduler in common -- carrier aggregation (Rel-10) (hereinafter "Rel-10 CA") is employed. In Rel-10 CA, the serving cell is made the PCell (Primary Cell), and communication is carried out by using SCells (Secondary Cells) that are present in different frequency bands from that of the PCell. In a user terminal UE, the function of deactivating a SCell when there is no communication in the SCell is supported.

When a Scell is in the deactivated state, for example, the user terminal UE does not transmit the SRS (Sounding Reference Signal) or receive downlink control signals in the PDCCH (Physical Downlink Control Channel). Consequently, the battery consumption of the user terminal UE is saved. The activation/deactivation of SCells is done by way of MAC signaling, and can be controlled relatively dynamically. When a SCells is activated, the user terminal UE carries out CQI measurements and so on, and communication is carried out. Note that Rel-10 CA may be also referred to as "intra-eNB CA."

On the other hand, when a macro cell M and small cells S use separate base stations -- that is, use different schedulers -- dual connectivity is employed instead of Rel-10 CA. Dual connectivity is realized by configuring secondary base stations (secondary eNBs), in addition to the master base station MeNB (Master eNB), in a user terminal UE. In dual connectivity, the battery consumption of the user terminal UE is saved by configuring DRX (Discontinuous Reception) on a per base station basis. Note that dual connectivity may be referred to as "inter-eNB CA."

As shown in FIG. 2, a user terminal UE in DRX mode (discontinuous reception mode) is activated periodically in a predetermined DRX cycle, and monitors downlink control signals (PDCCH) in receiving durations ("on durations"). When traffic is produced on the terminal side, a scheduling request is transmitted from the user terminal UE in DRX mode, and uplink communication is promptly resumed. Also, when traffic is produced on the NW side (base station side), the user terminal UE in DRX mode receives downlink control signals in on durations, and downlink communication is resumed.

As noted earlier, in Rel-10 CA, the activation/deactivation of SCells can be controlled dynamically by way of MAC signaling. Consequently, even when traffic is produced on the NW side, it is possible to promptly activate SCells in the deactivated state and resume data communication. However, when traffic is produced on the NW side in dual connectivity, it is necessary to receive downlink control signals in DRX on-durations, and the operation to start data communication relies upon the DRX cycle. Now, before describing the present invention, the general operation for starting data communication in dual connectivity will be described in detail below.

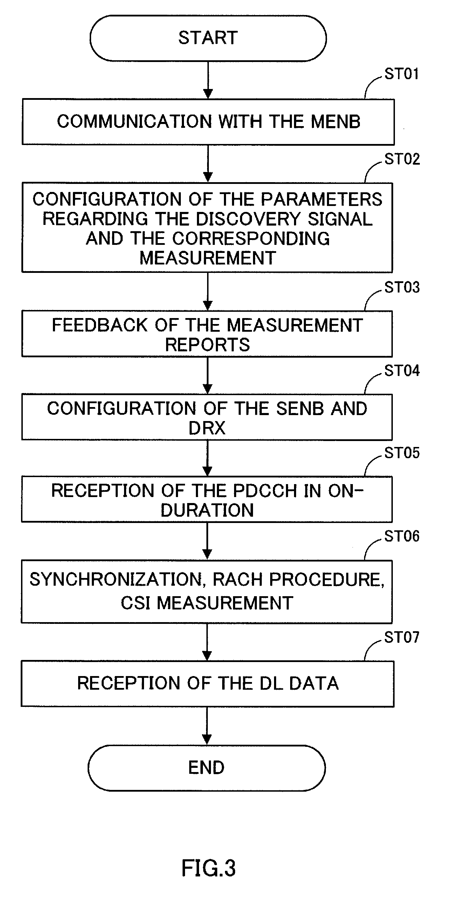

FIG. 3 shows an example of the operation of a user terminal UE for starting data communication in dual connectivity. First, the user terminal UE, in RRC-connected mode, communicates with the master base station MeNB of the macro cell M (step ST01). Next, assist information (parameters such as the timing of transmission, the transmission cycle, the transmission frequency, the signal structure, etc.) for receiving the discovery signal (hereinafter referred to as "DS") as a detection/measurement signal is reported from the master base station MeNB to the user terminal UE. Then, the user terminal UE receive the DS based on the assist information and carries out measurements in a carrier of a different frequency band from the carrier of the master base station MeNB (step ST02).

Next, the user terminal UE feeds back a measurement report that is acquired from the DS to the master base station MeNB (step ST03). Next, based on the measurement report, for example, a secondary base station SeNB where the RSRP (Reference Signal Received Power) is high is assigned to the user terminal UE. At this time, DRX is configured in the user terminal UE, regardless of whether the small cell S is ON/OFF (step ST04). Next, when traffic is produced on the NW side, the user terminal UE in DRX mode tries to read the PDCCH in on durations (step ST05). By this means, the small cell S, if OFF, turns ON.

Then, the user terminal UE executes synchronization, the RACH (Random Access Channel) procedure and CSI (Channel State Information) measurements (step ST06), and receives downlink data from the secondary base station SeNB (step ST07). In this way, in dual connectivity, the user terminal UE receives the DS from the NW side and carries out measurements, and, by this means, a secondary base station SeNB is configured in the user terminal UE, together with DRX. Consequently when traffic is produced on the NW side, a DRX on-duration is waited for, and then the subsequent RACH procedure and so on are executed.

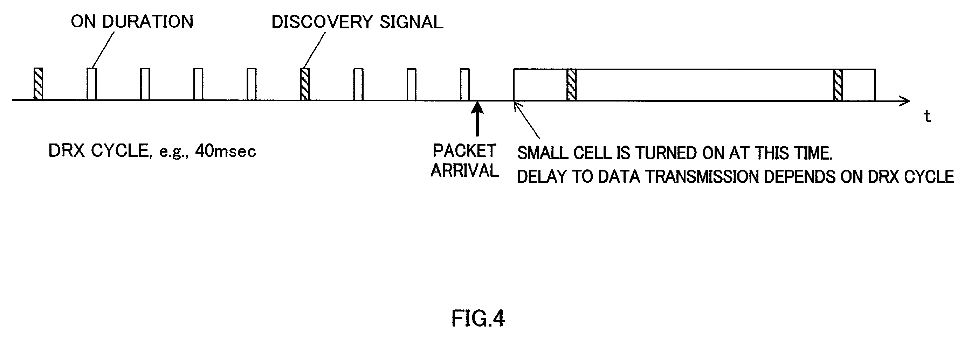

In the example shown in FIG. 4, with respect to the secondary base station SeNB (small cell S), the DS on-duration is configured to 2 msec, which is provided every 200 msec, the DRX cycle is configured to 40 msec, and the DRX on-duration is configured to 2 msec. In this case, when traffic is produced on the user terminal UE side, a DRX on-duration is not waited for, and uplink data communication is started shortly after the RACH procedure. Meanwhile, when traffic is produced on the NW side shortly after an on duration, it is not possible to start connecting operations such as the RACH procedure and so on, without waiting for the next on duration after the traffic is produced.

In particular, in long DTX (Discontinuous Transmission), it takes time until data communication is started. In this way, in dual connectivity, the operation at the start of data communication when traffic is produced on the NW side is not sufficiently optimized. So, the present inventors have made the present invention in order to prevent the start of downlink data communication from relying on the DRX cycle and delaying. That is, a gist of the present invention is that, when traffic is produced on the NW side, control is executed on the NW side so that a user terminal UE transitions from DRX mode to non-DRX mode, and data communication is started quickly with respect to a secondary base station SeNB (small cells S).

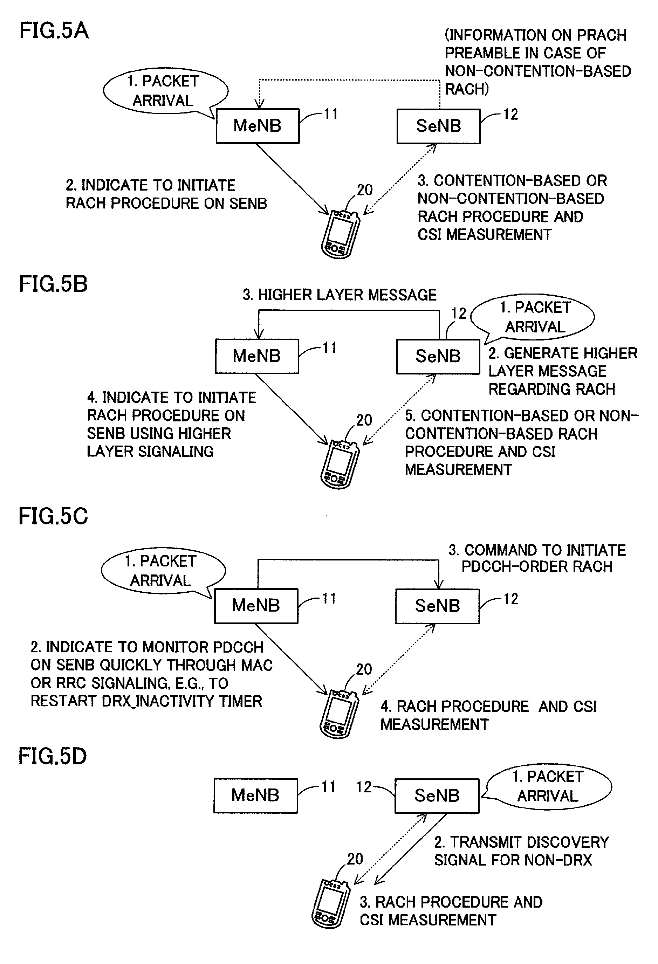

Now, the operation of a user terminal 20 for starting data communication with a secondary base station 12 according to the present embodiment will be described below with reference to FIG. 5. As for the operation method for the operation to start data communication, the following three methods may be possible. The first operation method is the method of making the user terminal 20 activate the RACH procedure (random access procedure) with the secondary base station 12. The second operation method is the method of making the user terminal 20 activate a drx_Inactivity Timer with respect to the secondary base station 12. The third operation method is the method of making the user terminal 20 transition from DRX mode to non-DRX mode by using a specific DS.

Assume that dual connectivity is applied to the user terminal 20 in the following descriptions of the first to third operation methods. Then, in a first carrier (for example, a carrier of a relatively low frequency band), the user terminal 20 is capable of communicating with the master base station 11. In a second carrier (for example, a carrier of a relatively high frequency band), the user terminal 20 assumes DRX mode with respect to the secondary base station 12. Also, the operation method for the operation for starting data communication is not limited to the above three operation methods, and any method may be used as long as the user terminal 20 is made to transition from DRX mode to non-DRX mode via control executed on the NW side.

FIG. 5A shows the first operation method when traffic (packet) is produced in the master base station 11. When traffic is produced in the master base station 11, command information for commanding a start of the RACH procedure with the secondary base station 12 is reported from the master base station 11 to the user terminal 20. Upon receiving the command information from the master base station 11, the user terminal 20 transitions from DRX mode to non-DRX mode. Then, the user terminal 20 starts the RACH procedure for the secondary base station 12, and, furthermore, carries out CSI measurements. By this means, data communication is started quickly between the user terminal 20 and the secondary base station 12 without relying on the DRX cycle.

Note that, with the first operation method, command information for commanding a start of a contention-based RACH procedure may be reported to the user terminal 20, or command information for commanding a start of a non-contention-based RACH procedure may be reported to the user terminal 20. In the event of the contention-based RACH procedure, the RACH is always monitored in the secondary base station 12. In this case, when the user terminal 20 is commanded to start the RACH procedure, a report to that effect is reported from the master base station 11 to the secondary base station 12 via a backhaul. By this means, the secondary base station 12 does not have to monitor the RACH all the time, so that the load of the secondary base station 12 is lightened.

Also, in the event of the non-contention-based RACH procedure, as shown with the broken line, the preamble of the RACH is indicated from the secondary base station 12 to the master base station 11 via the backhaul. The preamble indicated via the master base station 11 is transmitted from the user terminal 20 to the secondary base station 12, so that the contention of preambles is reduced. Note that the command information may be reported from the master base station 11 to the user terminal 20 by using any of MAC signaling, RRC signaling and the PDCCH.

FIG. 5B shows the first operation method when traffic (packet) is produced in the secondary base station 12. When traffic is produced in the secondary base station 12, a higher layer message regarding the RACH is generated in the secondary base station 12. The higher layer message is reported from the secondary base station 12 to the master base station 11 via the backhaul. The higher layer message is received in the master base station 11, and command information for commanding a start of the RACH procedure with the secondary base station 12 is reported from the master base station 11 to the user terminal 20.

Upon receiving the command information from the master base station 11, the user terminal 20 transitions from DRX mode to non-DRX mode. Then, the user terminal 20 starts the RACH procedure for the secondary base station 12, and, furthermore, carries out CSI measurements. By this means, data communication is started quickly between the user terminal 20 and the secondary base station 12 without relying on the DRX cycle. Note that, even when traffic is produced in the secondary base station 12, contention-based or non-contention-based command information may be reported as when traffic is produced in the master base station 11.

Also, a structure may be used in which, when traffic is produced in the secondary base station 12, command information to contain specific signaling content is generated in the secondary base station 12, and the master base station 11 forwards this to the user terminal 20. Also, it is equally possible to generate only the RACH procedure activation command in the secondary base station 12, and generate specific signaling content (command information) for the user terminal 20 in the master base station 11. Note that the command information may be reported from the master base station 11 to the user terminal 20 by using any of MAC signaling, RRC signaling and the PDCCH.

FIG. 5 C shows the second operation method when traffic (packet) is produced in the master base station 11. When traffic is produced in the master base station 11, command information for activating a drx_Inactivity Timer is reported from the master base station 11 to the user terminal 20. Upon receiving the command information from the master base station 11, the user terminal 20 activates the drx_Inactivity Timer and transitions from DRX mode to non-DRX mode. The user terminal 20 monitors the PDCCH of the secondary base station 12 until a predetermined period is over on this drx_Inactivity Timer.

Also, the master base station 11 commands the secondary base station 12 to start a PDCCH-order RACH procedure. The secondary base station 12 sends a RACH transmission command to the user terminal 20 by using the PDCCH and so on (dedicated preamble). Based on the command from the secondary base station 12 using the PDCCH, the user terminal 20 executes the RACH procedure, and, furthermore, carries out CSI measurements. By this means, data communication is started quickly between the user terminal 20 and the secondary base station 12 without relying on the DRX cycle.

Note that, although a structure has been described with the second operation method in which traffic is produced in the master base station 11, this structure is by no means limiting. The second operation method is applicable to structures in which traffic is produced in the secondary base station 12. Also, the command information may be reported from the master base station 11 to the user terminal 20 by using any of MAC signaling, RRC signaling and the PDCCH.

FIG. 5D show the third operation method when traffic (packet) is produced in the secondary base station 12. The secondary base station 12 transmits a specific DS to the user terminal 20, apart from the regular DS for carrier detection, in a predetermined cycle. For the specific DS, a DS for non-DRX transition, which is different from the regular DS and which is generated from the scrambling sequence, is prepared. The user terminal 20 transitions from DRX mode to non-DRX mode upon detecting the non-DRX transition DS. This transition from DRX mode to non-DRX mode may be carried out by starting the RACH procedure, by starting the drx_Inactivity Timer or by using short DRX.

After that, the user terminal 20 executes the RACH procedure for the secondary base station 12, and, furthermore, carries out CSI measurements. By this means, data communication is started quickly between the user terminal 20 and the secondary base station 12 without relying on the DRX cycle. In particular, the third operation method is effective when the DRX cycle is longer than the DS transmission cycle.

Note that a structure to configure specific subframes in which the regular DS and the non-DRX transition DS are transmitted, apart from subframes in which the regular DS is transmitted, may be used. In this case, the user terminal 20 detects the regular DS and the non-DRX transition DS in the specific subframes, and, when detecting the non-DRX transition DS, quickly transitions from DRX mode to non-DRX mode. By this means, the number of times of blind detection in the user terminal 20 can be reduced. Note that, although a structure has been described with the third operation method in which traffic is produced in the secondary base station 12, this structure is by no means limiting. The third operation method is equally applicable to structures in which traffic is produced in the master base station 11.

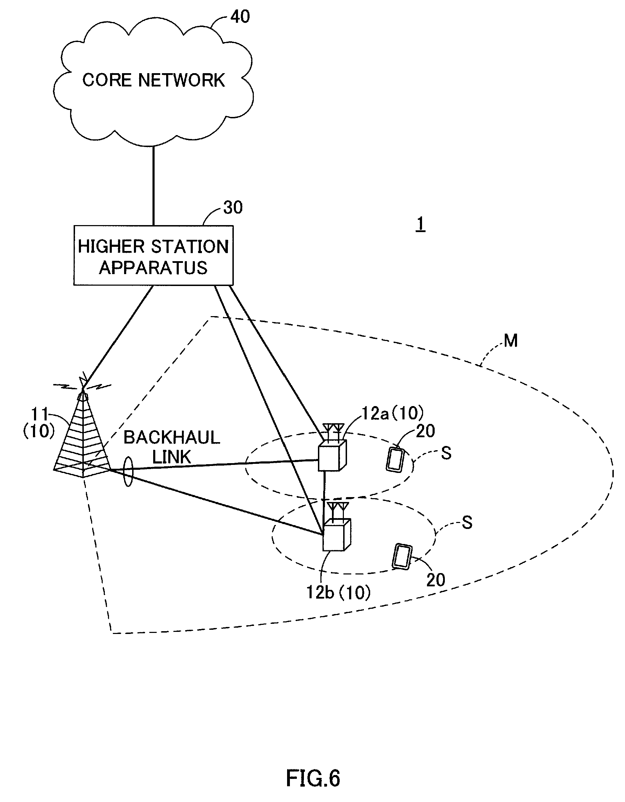

Now, the radio communication system according to the present embodiment will be described below in detail. FIG. 6 is a schematic structure diagram of the radio communication system according to the present embodiment. Note that the radio communication system shown in FIG. 6 is a system to incorporate, for example, the LTE system or SUPER 3G. This radio communication system can adopt carrier aggregation (CA) to group a plurality of fundamental frequency blocks (component carriers) into one, where the system bandwidth of the LTE system constitutes one unit. Also, this radio communication system may be referred to as "IMT-advanced," or may be referred to as "4G" or "FRA (Future Radio Access)."

The radio communication system 1 shown in FIG. 6 includes a master base station 11 that forms a macro cell M, and secondary base stations 12 that form small cells S, which are placed within the macro cell M and narrower than the macro cell M. User terminals 20 are placed in the macro cell M and in each small cell S. The user terminals 20 can connect with both the master base station 11 and the secondary base stations 12. In the macro cell M, a carrier of a relatively low frequency band (for example, 2 GHz) and a narrow bandwidth (referred to as "legacy carrier" and so on) is used. On the other hand, in the small cells S, a carrier of a relatively high frequency band (for example, 3.5 GHz and so on) and a wide bandwidth is used.

By means of dual connectivity, the user terminals 20 communicate with the master base station 11 in a relatively low frequency band, and communicate with the secondary base stations 12 in a relatively high frequency band. The master base station 11 and the secondary base stations 12 are connected with each other via an inter-base station interface (for example, optical fiber, the X2 interface, etc.). Also, carriers of the same frequency may be used in the macro cell M and the small cells S. The master base station 11 and the secondary base stations 12 are each connected with a higher station apparatus 30 and are connected with a core network 40 via the higher station apparatus 30. Note that the higher station apparatus 30 may be, for example, an access gateway apparatus, a radio network controller (RNC), a mobility management entity (MME) and so on, but is by no means limited to these.

Note that the master base station 11 may be referred to as an "eNodeB," a "transmitting/receiving point," and so on. Also, the secondary base stations 12 may be referred to as "pico base stations," "femto base stations," "home eNodeBs," "RRHs (Remote Radio Heads)," "micro base stations," "transmitting/receiving points" and so on. Also, it is equally possible to make a base station covering a small cell S the master base station 11 and make the base station covering the macro cell M a secondary base station 12. The user terminals 20 are terminals to support various communication schemes such as LTE, LTE-A and so on, and may be both mobile communication terminals and stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink.

In the radio communication system 1, a downlink shared channel (PDSCH: Physical Downlink Shared Channel), which is used by each user terminal 20 on a shared basis, downlink control channels (PDCCH: Physical Downlink Control Channel, and EPDCCH: Enhanced Physical Downlink Control Channel), a PCFICH (Physical Control Format Indicator Channel), a PHICH (Physical Hybrid-ARQ Indicator Channel), a broadcast channel (PBCH) and so on are used as downlink communication channels. User data and higher layer control information are communicated by the PDSCH. Downlink control information (DCI) is communicated by the PDCCH and the EPDCCH.

Also, in the radio communication system 1, a PUSCH (Physical Uplink Shared Channel), which is used by each user terminal 30 on a shared basis as an uplink data channel, a PUCCH (Physical Uplink Control Channel), which is an uplink control channel, and so on are used as uplink communication channels. User data and higher layer control information are communicated by the PUSCH. Also, by means of the PUCCH, downlink radio quality information (CQI: Channel Quality Indicator), delivery acknowledgement information (ACKs/NACKs) and so on are communicated.

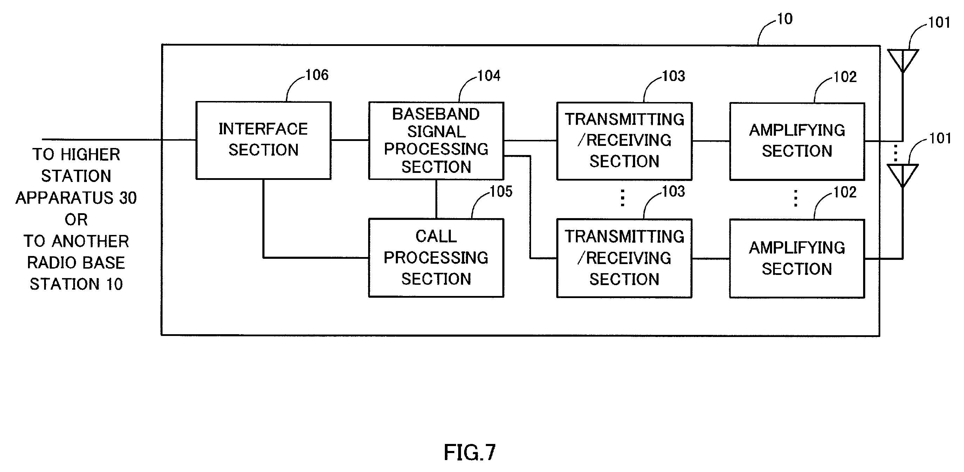

The master base station 11 and the secondary base stations 12 will be hereinafter collectively referred to as "radio base station 10," unless specified otherwise. FIG. 7 is a diagram to show an overall structure of a radio base station 10 according to the present embodiment. The radio base station 10 has a plurality of transmitting/receiving antennas 101 for MIMO communication, amplifying sections 102, transmitting/receiving sections (transmitting sections) 103, a baseband signal processing section 104, a call processing section 105 and an interface section 106.

User data to be transmitted from the radio base station 10 to a user terminal 20 on the downlink is input from the higher station apparatus 30, into the baseband signal processing section 104, via the interface section 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is forwarded to each transmitting/receiving section 103. Furthermore, control signals are also subjected to transmission processes such as channel coding and an inverse fast Fourier transform, and are forwarded to each transmitting/receiving section 103.

Each transmitting/receiving section 103 converts the downlink signals, which are pre-coded and output from the baseband signal processing section 104 on a per antenna basis, into a radio frequency band. The amplifying sections 102 amplify the radio frequency signals having been subjected to frequency conversion, and transmit the resulting signals through the transmitting/receiving antennas 101.

Meanwhile, as for uplink signals, the radio frequency signals that are received in the transmitting/receiving antennas 101 are each amplified in the amplifying sections 102, converted into baseband signals through frequency conversion in each transmitting/receiving section 103, and input in the baseband signal processing section 104.

In the baseband signal processing section 104, the user data that is included in the input baseband signals is subjected to an FFT process, an IDFT process, error correction decoding, a MAC retransmission control receiving process, and RLC layer and PDCP layer receiving processes, and the result is forwarded to the higher station apparatus 30 via the interface section 106. The call processing section 105 performs call processing such as setting up and releasing communication channels, manages the state of the base station and manages the radio resources.

The interface section 106 transmits/receives signals to and from neighboring base stations (backhaul signaling) via an inter-base station interface (for example, optical fiber, the X2 interface, etc.). For example, data is transmitted and received between the master base station 11 and the secondary base stations 12 via the interface section 106. Alternatively, the interface section 106 transmits and receives signals to and from the higher station apparatus 30 via a predetermined interface.

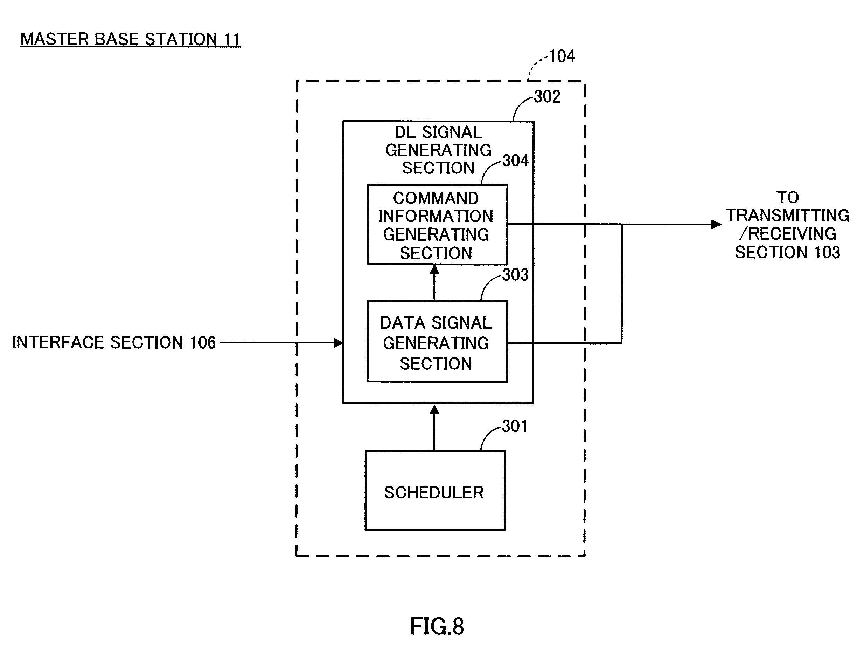

FIG. 8 is a diagram to show a functional structure of a master base station 11 according to the present embodiment. Note that the following functional structure is primarily formed with a baseband signal processing section 104 provided in the master base station 11 and so on. As shown in FIG. 8, the master base station 11 has a scheduler 301 and a DL signal generating section 302. Although only part of the structure of the baseband signal processing section 104 is shown here, assume that a structure to meet the needs is provided without shortage.

The scheduler 301 allocates (schedules) the radio resources for DL signals to transmit to the user terminal 20 and the radio resources for UL signals to transmit from the user terminals 20. According to the above-described first and second operation methods, the scheduler 301 controls the DRX mode of the user terminal 20 with respect to the secondary base station 12 depending on the traffic for the user terminal 20 that is produced in the master base station 11 and in the secondary base stations 12. When traffic for the user terminal 20 is produced in the master base station 11 or the secondary base station 12, the scheduler 301 commands the DL signal generating section 302 to generate command information for making the user terminal 20 in DRX mode transition to non-DRX mode.

The DL signal generating section 302 includes a data signal generating section 303 that generates data signals for the user terminal 20, and a command information generating section (generating section) 304 that generates command information for the user terminal 20. The data signal generating section 303 generates data signals when a packet is input through the interface section 106. When a data signal is generated in the data signal generating section 303, or when a data signal is generated in the secondary base station 12, the command information generating section 304 generates command information.

In this case, information for allowing the user terminal 20 to start the contention-based or the non-contention-based RACH procedure (random access) is the command information for the first operation method. The command information commands a start of the RACH procedure, and the user terminal 20 transitions from DRX mode to non-DRX mode. Information allowing the user terminal 20 to forcibly activate the drx_Inactivity Timer is the command information for the second operation method. The command information commanding activation of the drx_Inactivity Timer, and the user terminal 20 transitions from DRX mode to non-DRX mode.

The signals generated in the data signal generating section 303 and the command information generating section 304 are transmitted to the user terminal 20 via the transmitting/receiving sections 103. The command information may be transmitted using any of MAC signaling, RRC signaling and the PDCCH in the transmitting/receiving sections 103. Note that, when commanding activation of the drx_Inactivity Timer, the scheduler 301 commands the secondary base station 12 to start the PDCCH-order RACH procedure.

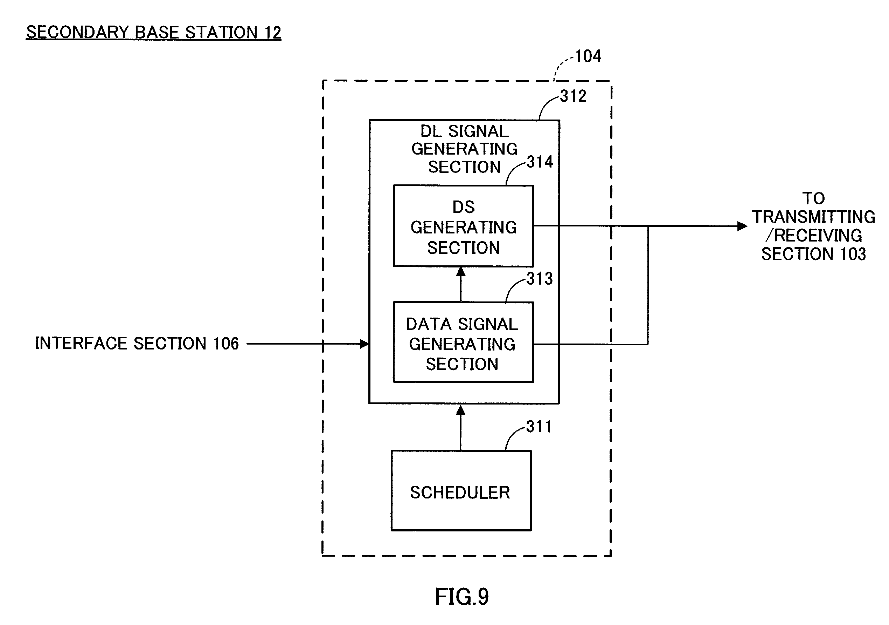

FIG. 9 is a diagram to show a functional structure of a secondary base station 12 according to the present embodiment. Note that the following functional structure is primarily formed with a baseband signal processing section 104 provided in the secondary base station 12, and so on. As shown in FIG. 9, the secondary base station 12 has a scheduler 311 and a DL signal generating section 312. Although only part of the structure of the baseband signal processing section 104 is shown here, assume that a structure to meet the needs is provided, without shortage.

The scheduler 311 allocates (schedules) the radio resources for DL signals to transmit to the user terminal 20 and the radio resources for UL signals to transmit from the user terminal 20. For example, the scheduler 311 schedules DS transmission in accordance with DRX on-durations in the user terminal 20 (see FIG. 4). According to the third operation method, the scheduler 311 controls the DRX mode of the user terminal 20 with respect to the secondary base station 12 depending on the traffic for the user terminal 20 that is produced in the master base station 11 and secondary base station 12. When traffic for the user terminal 20 is produced in the master base station 11 or in the secondary base station 12, the scheduler 311 commands the DL signal generating section 312 to generate the DS for non-DRX transition.

The DL signal generating section 312 includes a data signal generating section 313 that generates data signals for the user terminal 20, and a DS generating section (generating section) 314 that generates DSs for the user terminal 20. When a packet is input through the interface section 106, the data signal generating section 313 generates a data signal. The DS generating section 314 generates the regular DS for carrier detection. Alternatively, when a data signal is generated in the data signal generating section 313, or when a data signal is generated in the secondary base station 12, the DS generating section 314 generates the non-DRX transition DS.

In this case, the non-DRX transition DS for the third operation method is generated by using a scrambling sequence that is different from that of the regular DS. The non-DRX transition DS commands the user terminal 20 to, for example, start the RACH procedure, activate the drx_Inactivity Timer or transition to short DRX. The non-DRX transition DS commands a start of the RACH procedure and so on, and the user terminal 20 transitions from DRX mode to non-DRX mode.

Note that, although the non-DRX transition DS is transmitted in the same subframe as that of the regular DS, it is equally possible to configure the non-DRX transition DS to be transmitted a smaller number of times than the regular DS (that is, transmitted in a longer cycle). That is, a structure may be used in which, among the subframes in which the regular DS is transmitted, the regular DS and the non-DRX transition DS are transmitted in part of the subframes. By this means, it is possible to reduce the load of the DS detection process on the user terminal 20 side.

The signals generated in the data signal generating section 313 and the DS generating section 314 are transmitted to the user terminal 20 via the transmitting/receiving sections 103. Note that the DL signal generating section 312 also generates the RACH signal (RACH response, dedicated preamble, etc.), which is used in the RACH procedure between the user terminal 20 and the secondary base station 12, and so on. Also, it is possible to employ a structure, in which command information is generated in the DS generating section 314 of the secondary base station 12, and the master base station 11 is made to transmit the command information to the user terminal 20.

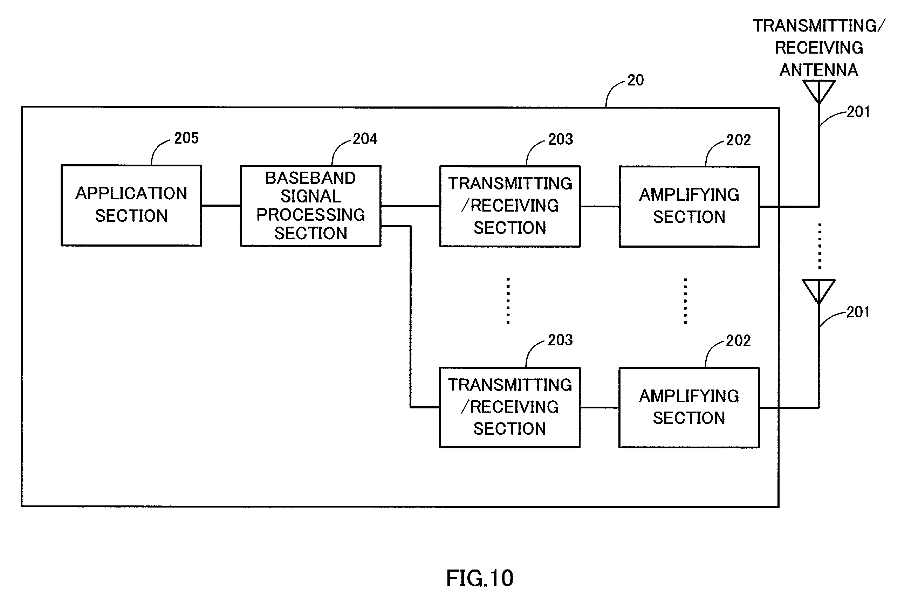

FIG. 10 is a diagram to show an overall structure of a user terminal 20 according to the present embodiment. The user terminal 20 has a plurality of transmitting/receiving antennas 201 for MIMO communication, amplifying sections 202, transmitting/receiving sections (receiving sections) 203, a baseband signal processing section 204 and an application section 205.

As for downlink data, radio frequency signals that are received in the plurality of transmitting/receiving antennas 201 are each amplified in the amplifying sections 202, and subjected to frequency conversion and converted into baseband signals in the transmitting/receiving sections 203. The baseband signals are subjected to receiving processes such as an FFT process, error correction decoding and retransmission control, in the baseband signal processing section 204. In this downlink data, downlink user data is forwarded to the application section 205. The application section 205 performs processes related to higher layers above the physical layer and the MAC layer. Also, in the downlink data, broadcast information is also forwarded to the application section 205.

Meanwhile, uplink user data is input from the application section 205 to the baseband signal processing section 204. In the baseband signal processing section 204, a retransmission control (H-ARQ (Hybrid ARQ)) transmission process, channel coding, precoding, a DFT process, an IFFT process and so on are performed, and the result is forwarded to each transmitting/receiving section 203. Baseband signals that are output from the baseband signal processing section 204 are converted into a radio frequency band in the transmitting/receiving sections 203. After that, the amplifying sections 202 amplify the radio frequency signals having been subjected to frequency conversion, and transmit the results from the transmitting/receiving antennas 201.

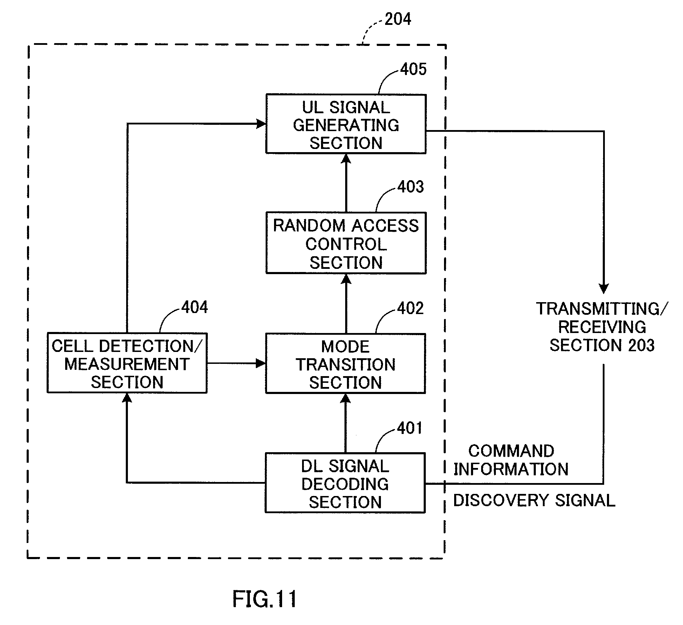

FIG. 11 is a diagram to show a functional structure of the user terminal 20 according to the present embodiment. Note that the following functional structure is primarily formed with the baseband signal processing section 204 provided in the user terminal 20 and so on. As shown in FIG. 11, the user terminal 20 has a DL signal decoding section 401, a mode transition section 402, a random access control section 403, a cell detection/measurement section (detection section) 404 and a UL signal generating section 405. Although only part of the structure of the baseband signal processing section 104 is shown here, assume that a structure to meet the needs is provided without shortage.

The DL signal decoding section 401 decodes DL signals that are transmitted from the master base station 11 and the secondary base station 12. For example, the DL signal decoding section 401 acquires command information that is transmitted form the master base station 11, the DS that is transmitted from the secondary base station 12 and so on. The command information is output from the DL signal decoding section 401 to the mode transition section 402, and the DS is output from the DL signal decoding section 401 to the cell detection/measurement section 404.

When a packet is produced in the application section 205 (user terminal 20 side), the mode transition section 402 quickly transitions from DRX mode to non-DRX mode. On the other hand, when traffic is produced in the master base station 11 or in the secondary base station 12, the mode transition section 402 transitions from DRX mode to non-DRX mode based on the command information. For example, in the event of the first operation method, the mode transition section 402 commands the random access control section 403 to start the RACH procedure based on the command information, and transitions from DRX mode to non-DRX mode. Also, in the event of the second operation method, the mode transition section 402 activates the drx_Inactivity Timer and transitions from DRX mode to non-DRX mode. In this second operation method, the user terminal 20 monitors the PDCCH from the secondary base station 12 until a predetermined period is over.

The cell detection/measurement section 404 performs blind detection of the DS received from the secondary base station 12. With the third operation method, when a non-DRX transition DS is detected, a command to start the RACH procedure, a command to activate the drx_Inactivity Timer, a command to transition to short DRX and so on are output to the mode transition section 402, so as to make the user terminal 20 transition to non-DRX mode. Also, when the regular DS is detected, the cell detection/measurement section 404 measures the received state (the RSRP, the RSRQ, etc.) with respect to this DS. The measurement result is fed back to the master base station 11 and the secondary base station 12 in the form of a measurement report.

The random access control section 403 controls the random access procedure. The random access control section 403 controls the PRACH signal based on, for example, command information that is transmitted from the master base station 11, and a trigger for the RACH signal that is transmitted from the secondary base station 12 in the PDCCH (Dedicated preamble).

The UL signal generating section 405 generates UL signals (the PRACH signal, measurement report, etc.) based on commands from the random access control section 403 and the cell detection/measurement section 404. Also, the UL signal generating section 405 generates uplink control signals such as delivery acknowledgement signals, uplink data signals and so on.

As described above, in the radio communication system 1 according to the present embodiment, when traffic is produced in a master base station 11 or in a secondary base station 12 in dual connectivity, command information is transmitted from the master base station 11 to a user terminal 20. By receiving the command information, the user terminal 20 transitions from DRX mode to non-DRX mode with respect to the secondary base station 12. By this means, the operation of the user terminal 20 for starting data communication with the secondary base station 12 does not rely on the cycle of receiving timings in DRX mode, so that it is possible to quickly start data communication between the user terminal 20 and the secondary base station 12.

The present invention is by no means limited to the above embodiment and can be implemented with various changes. For example, it is possible to adequately change the number of carriers, the bandwidth of the carriers, the signaling method, the number of processing sections, the order of processes and so on in the above description, without departing from the scope of the present invention, and implement the present invention. Besides, the present invention can be implemented with various changes without departing from the scope of the present invention.

The disclosure of Japanese Patent Application No. 2013-227340, filed on October 31, 2013, including the specification, drawings and abstract is incorporated herein by reference in its entirety.

## Claims

1. A radio base station that, when a user terminal is in discontinuous reception mode in a first carrier used in another radio base station, communicates with the user terminal by using a second carrier that is different from the first carrier of the other radio base station, the radio base station comprising a transmitting section that, when traffic is produced in the radio base station or in the other radio base station, transmits command information for allowing the user terminal to transition from discontinuous reception mode to non-discontinuous reception mode, to the user terminal.

2. The radio base station according to claim 1, wherein the transmitting section transmits command information for commanding the user terminal to make a random access to the other radio base station.

3. The radio base station according to claim 2, wherein the transmitting section transmits command information for commanding a contention-based random access or command information for commanding a non-contention-based random access.

4. The radio base station according to claim 1, wherein the transmitting section transmits command information for allowing the user terminal to activate a timer for making a transition from discontinuous reception mode to non-discontinuous reception mode until a predetermined period is over.

5. The radio base station according to one of claim 1 to claim 4, further comprising a generating section that generates the command information when traffic is produced in the radio base station or in the other radio base station.

6. The radio base station according to one of claim 1 to claim 4, wherein, when traffic is produced in the other radio base station, the transmitting section forwards command information generated in the other radio base station to the user terminal.

7. A user terminal that communicates with a radio base station by using a second carrier when the user terminal is in discontinuous reception mode in a first carrier that is used in another radio base station, the second carrier being different from the first carrier of the other radio base station, the user terminal comprising:
a receiving section that, when traffic is produced in the radio base station or in the other radio base station, receives command information for allowing transition from discontinuous reception mode to non-discontinuous reception mode, from the radio base station; and
a mode transition section that transitions from discontinuous reception mode to non-discontinuous reception mode based on the command information.

8. The user terminal according to claim 7, further comprising a detection section that detects the first carrier based on a detection/measurement signal from the other radio base station,
wherein the receiving section receives, from the radio base station, command information for making a transition from discontinuous reception mode to non-discontinuous reception in the first carrier detected in the detection section.

9. A radio communication method for allowing a user terminal and a radio base station to communicate by using a second carrier when the user terminal is in discontinuous reception mode in a first carrier that is used in another radio base station, the second carrier being different from the first carrier of the other radio base station, the radio communication method comprising:
when traffic is produced in the radio base station or in the other radio base station, transmitting command information for allowing the user terminal to transition from discontinuous reception mode to non-discontinuous reception mode, from the radio base station to the user terminal; and
receiving the command information from the radio base station, in the user terminal, and transitioning from discontinuous reception mode to non-discontinuous reception mode based on the command information.

10. A radio base station that, when a user terminal that communicates with another radio base station by using a second carrier is in discontinuous reception mode, communicates with the user terminal by using a first carrier that is different from the second carrier of the other radio base station, the radio base station comprising:
a generating section that generates a detection/measurement signal for allowing the user terminal to detect the first carrier; and
a transmitting section that transmits the detection/measurement signal to the user terminal in accordance with an on duration in the user terminal in discontinuous reception mode,
wherein, apart from a regular detection/measurement signal for detecting the first carrier, the generating section generates a detection/measurement signal for mode transition for allowing a transition from discontinuous reception mode to non-discontinuous reception mode, as a
detection/measurement signal.
